# EUROPEAN PATENT APPLICATION

(11) **EP 4 682 678 A1**
(43) Date of publication of application: **21.01.2026**
(21) Application number: 24306217.1
(22) Date of filing: 19.07.2024
(51) Int. Cl.: G06F 3/00, H05B 47/00, H04N 21/422, H04N 21/258, H04N 21/41, H04N 21/81, H04N 21/854

(54) **METHOD AND APPARATUS OF ENCODING DATA REPRESENTATIVE OF A REGION OF A 3D ENVIRONMENT**

(71) Applicant: WYVRN, 59800 Lille (FR)
(72) Inventor: VEZZOLI, Eric, 59000 LILLE (FR); GRAUPMANN, Timothy, MONROE, 98272 (US)
(74) Representative: RVDB

(57) **Abstract**

There is provided methods and apparatus of encoding data representative of a region of a three-dimensional environment, called 3D environment, in a container. To reach that aim, first data representative of a geometric representation of the region is encoded in the container (110). Second data representative of a position of the geometric representation in the 3D environment and of a set of transforms applied to the geometric representation is encoded in the container (110). Third data representative of color attributes associated with the region is encoded in the container (110).

There is also provided methods and apparatus of decoding data representative of the region from the container (110).

## Description

### FIELD

The present application generally relates to the field of encoding data representative of a region in a three-dimensional (3D) environment and, in particular, to the encoding of color attributes associated with the region. The present application also relates to method and apparatus of encoding and decoding data representative of color attributes associated with a region of a 3D environment. The present application also relates to method and apparatus of signaling data representative of the region and/or data representative of the color attributes in a container and method and apparatus of parsing such data from the container.

### BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

To improve user experience when playing a media content such as a video content or a video game, it is known to control the lighting of one or more peripherals in the media content playback environment.

Controlling the lighting of such peripherals may for example increase the feeling of immersion while watching a movie or playing a video game. Such peripherals comprise smart LED light bulbs, RGB (Red, Green, Blue) components and accessories such as LED strips, keyboards, mice, mouse mats, speakers, screens, headsets or even the casing of the media player. Lighting or color effects may be obtained by controlling the one or more light-emitting devices such as LED (Light-Emitting Diode) equipping the one or more peripherals arranged in the media content playback environment.

Lighting or color effects may further be rendered in a determined environment to provide an appropriate ambient lighting

However, the amount of data needed to describe the lighting or color effects may be important and require resource to transport, store and/or process the data.

### SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method of encoding data representative of a region of a three-dimensional environment, called 3D environment, in a container, the method comprising:
- encoding first data representative of a geometric representation of the region;
- encoding second data representative of a position of the geometric representation in the 3D environment and of a set of transforms applied to the geometric representation; and
- encoding third data representative of color attributes associated with the region.

In an exemplary embodiment, the method further comprises:
- encoding fourth data representative of a timestamp of associating the color attributes with the region; and
- encoding fifth data representative of a duration of associating the color attributes with the region from the timestamp.

In an exemplary embodiment, the method further comprises encoding sixth data representative of a color transition to be applied to the region starting with the color attributes, the sixth data comprising data representative of target color attributes ending the color transition.

In an exemplary embodiment, the method further comprises encoding seventh data representative of at least a color event representative of a color animation, the seventh data comprising data representative of an identifier of the color event.

According to a second aspect of the present application, there is provided a method of decoding data representative of a region of a three-dimensional environment, called 3D environment, from a container, the method comprising:
- decoding first data representative of a geometric representation of the region;
- decoding second data representative of a position of the geometric representation in the 3D environment and of a set of transforms applied to the geometric representation; and
- decoding third data representative of color attributes associated with the region

In an exemplary embodiment, the method further comprises:
- decoding fourth data representative of a timestamp of associating the color attributes with the region; and
- decoding fifth data representative of a duration of associating the color attributes with the region from the timestamp.

In an exemplary embodiment, the method further comprises decoding sixth data representative of a color transition to be applied to the region starting with the color attributes, the sixth data comprising data representative of target color attributes ending the color transition.

In an exemplary embodiment, the method further comprises decoding seventh data representative of at least a color event representative of a color animation, the seventh data comprising data representative of an identifier of the color event.

In another exemplary embodiment, the method further comprises:
- receiving eighth data representative of a position of a lighting device in the 3D environment;
- checking intersection between the lighting device and the region according to the first, second and eighth data;
- controlling the lighting device according to a result of the checking.

In a further exemplary embodiment, the controlling of the lighting device comprises transmitting lighting control parameters representative of the color attributes to the lighting device when the lighting device is comprised in the region.

In another exemplary embodiment, the first data comprises:
- first information representative of a type of the geometric representation, the type corresponding to primitive or mesh; and
- second information representative of:
   - a geometric shape associated with the primitive when the first information is representative of the primitive type, or
   - a set of elements when the first information is representative of the mesh type.

In an additional exemplary embodiment, when the first information is representative of the mesh type, the second information is representative of an identifier identifying the set of elements, the set of elements comprising a set of vertices and a set of faces, each face of the set of faces being defined with vertex identifiers identifying 3 vertices among the set of vertices.

In another exemplary embodiment, the position corresponds to a position of a reference point of the geometric representation in the 3D environment and the set of transforms comprises:
- a scaling; and
- a rotation.

In a further exemplary embodiment, the third data comprises chrominance information and luminance information.

According to a third aspect of the present application, there is provided a device or an apparatus comprising a memory associated with at least a processor configured to implement the method in accordance with the first aspect of the present application and/or the second aspect of the present application.

According to a fourth aspect of the present application, there is provided a computer program product including instructions which, when the program is executed by one or more processors, causes the one or more processors to carry out a method according to the first aspect of the present application and/or the second aspect of the present application.

According to a fifth aspect of the present application, there is provided a non-transitory storage medium carrying instructions of program code for executing a method according to the first aspect of the present application and/or the second aspect of the present application.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows a schematic representation of a data coding/decoding system in which embodiments of the present disclosure may be implemented, in accordance with exemplary embodiments;
**Figures 2****,** **3 and** 4 each shows a geometric representation of one or more regions of a three-dimensional environment in accordance with exemplary embodiments;
**Figures 5 and 6** each shows a lighting device intersecting with a region of the 3D environment of figure 2, in accordance with exemplary embodiments;
**Figure 7** shows a schematic block diagram of steps of a method of encoding data representative of a region of the 3D environment of figure 2 or 3, in accordance with exemplary embodiments;
**Figure 8** shows a schematic block diagram of steps of a method of decoding data representative of a region of the 3D environment of figure 2 or 3, in accordance with exemplary embodiments;
**Figure 9** illustrates a schematic block diagram of an example of a system or apparatus in which various aspects and exemplary embodiments are implemented.

Similar reference numerals may have been used in different figures to denote similar components.

### DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

Exemplary embodiments described hereinafter may be combined with each other or each of the exemplary embodiment may be individually implemented, e.g., as an alternative embodiment.

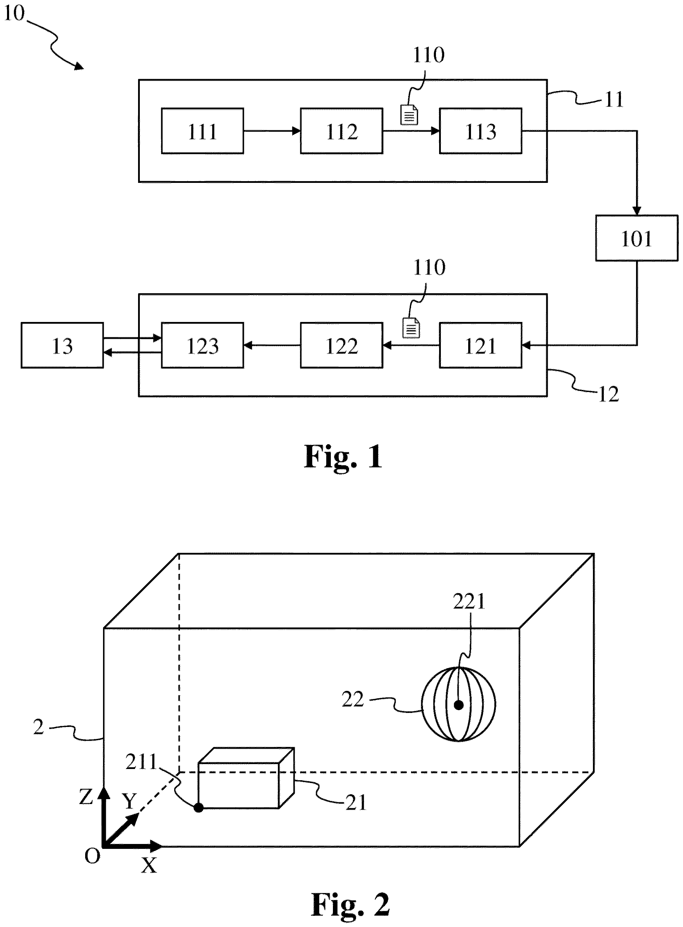

**Figure 1** illustrates a schematic representation of a data coding / decoding system 10 in accordance with at least one exemplary embodiment.

The system 10 is configured to encode and/or decode data representative of one or more parts, called regions, of a three-dimensional (3D) environment.

The 3D environment corresponds to a 3D space, e.g., to the world or to a box bounding a space like a country, a city, a block or district of a town, a building, a house, a floor of a house or a building, a room, etc.

The system 10 comprises a source device 11, a transmission medium 101, and a destination device 12. The source device 11 encodes data representative of one or more regions of the 3D environment into a container 110 for more efficient storage and/or transmission. The source device 11 transmits the container 110 to the destination device 12 via transmission medium 101. The destination device 12 decodes the container 110 to control one or more lighting devices located in the 3D environment or for other forms of consumption.

The container 110 corresponds to a bitstream, a datastream, a network packet, a file (e.g., a text file or a binary file), i.e., to any data structure that is formatted to include data.

Binary structures such as binary files (e.g., ISOBMFF files) are one instantiation of a container. Binary files define the syntax for parsing and understanding the structures of files. They have a start and an end and typically holds self-contained information. Binary files are generally transported and stored as a whole.

However, binary files may be further segmented into smaller file units, e.g., transport packets, for the purpose of transmission over a network such as using SCTP (Synchronous Collaboration Transport Protocol), IRTP (Interactive Real-Time Protocol), ETP (Efficient Transport Protocol), RTNP (Real Time Network Protocol) or RTP/I (Real Time application-level Protocol for distributed Interactive media).

The destination device 12 receives the container 110 from the source device 12 via a storage medium or the transmission medium 101. The source device 11 and the destination device 12 may be any one of a number of different devices, including a cluster of interconnected computer systems acting as a pool of seamless resources (also referred to as a cloud of computers or cloud computer), a server, a desktop computer, a laptop computer, a tablet computer, a smartphone, a wearable device, a television, a video gaming console, a set-top box, a video streaming device, or a head mounted display.

The source device 11 comprises an input interface 111 configured to receive the data to be encoded, an encoder 112 and an input/output interface 113. The input interface 111 provides the data to be encoded to the encoder 112, the data to be encoded being received from a remote device, a storage medium or a peripheral device configured to input data via an HMI (Human-Machine Interface).

In an embodiment, the data to be encoded may for example be obtained from a 3D modeling tool, e.g., a modeling software, configured to generate and model geometric representations of 3D objects.

The encoder 112 is configured to encode, write and or signal the data to be encoded in the container 110 according to a determined format or syntax, as explained hereinafter.

The input/output interface 113 is configured to write and/or store the container 110 onto the transmission medium 101 for transmission to the destination device 12. In addition, or alternatively, the input/output interface 113 is configured to transmit, upload, and/or stream the container 110 to the destination device 12 via the transmission medium 101. The input/output interface 113 is further configured to receive data from the destination device 12. The input/output interface 113 may comprise a wired and/or wireless transmitter configured to transmit, upload, and/or stream the container 110 according to one or more proprietary and/or standardized communication protocols, such as Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, and Wireless Application Protocol (WAP) standards. The input/output interface 113 may further comprise a wired and/or wireless receiver configured to receive, download the data transmitted by the destination device 12 to the source device 11 according to the one or more proprietary and/or standardized communication protocols.

The transmission medium 101 may comprise a wireless, wired, and/or computer readable medium. For example, the transmission medium 101 may comprise one or more wires, cables, air interfaces, optical discs, flash memory, and/or magnetic memory. In addition, or alternatively, the transmission medium 101 may comprise one more networks (e.g., the Internet) or file servers configured to store and/or transmit encoded data.

The destination device 12 comprises an input/output interface 121, a decoder 122 and an input/output interface 123. The input/output interface is configured to receive, download and/or stream the container 110 from the source device 11 via the transmission medium 101 and/or transmit, upload and/or stream data to the source device 11 via the transmission medium 101. The decoder 122 decodes, reads and/or parses the data and information comprised in the container 110 for transmission to one or more end devices 13 via the input/output interface 123 and/or for further processing.

The one or more end devices 13 correspond for example to lighting device(s) arranged and located in the 3D environment. The data decoded from the container 110 by the decoder 122 may be used, directly or following further processing, to control the one or more lighting devices to render lighting effect(s) in the 3D environment.

According to a variant, the end device 13 corresponds to a control device receiving the decoded data from the destination device and configured to control one or more lighting devices from control parameters obtained from the decoded data, with or without further processing of the decoded data.

A lighting device corresponds to any device configured to emit light (lamp, light bulb, strip of LEDs or any peripheral or device incorporating one or more light sources, e.g., RGB light sources (for example arrangement of LEDs)) that is configured to be controlled, e.g., by the destination device 12 or the control device, to render a lighting effect. The lighting effect may be dynamic, i.e., the lighting effect may vary over time and/or space.

A lighting device corresponds to a device whose primary function is to illuminate the spatial cell it belongs to, or to a device configured to implement several functions, including the ability to reproduce a lighting device through the one or more light sources it embeds.

Examples of lighting devices include light fixtures, wall-mounted lights, ceiling-mounted lamps, floor-standing lamps, desk lamps, LED light strips, display devices, peripheral devices such as keyboard or mouse, gaming mat, mouse mat, palm rest, chair, desk, XR headset, headphones, bracelet, head and/or lumbar support device or chair.

The lighting device may correspond to a connected lighting device, i.e., a lighting device comprising a communication interface configured to communicate (receive and/or transmit) data with the destination device, through the input/output interface 123, or with the control device, e.g., via a wired connection (e.g., USB) or via a wireless connection (e.g., Bluetooth^{®}, Zigbee^{®}, Wifi^{®}).

A lighting effect corresponds to any generation of light through one or more lighting devices. The lighting effect may correspond to a simple lighting effect (e.g., involving a single light-emitting device) or a more complex lighting effect involving a single or various light-emitting devices to render a light animation with time and/or spatial control of the light source(s) incorporated in the one or more light-emitting devices. Examples of complex lighting effect comprise a synchronized lighting effect, a coordinated lighting effect, an animated lighting effect, a propagating wave lighting effect, a breathing lighting effect, and a spectrum lighting effect.

A process of encoding data representative of a region of the 3D environment in the container 110 is implemented in the source device 11, and more specifically in the encoder 112. A corresponding process of decoding the data representative of a region of the 3D environment from the container 110 is implemented in the destination device 12, and more specifically in the decoder 122.

While described in reference to a region, the process of encoding and the process of decoding applies to the encoding and decoding, respectively, of data representative or a plurality of regions of the 3D environment.

A region corresponds to a part of the 3D environment. A region forms a volume within the 3D environment, the volume having any shape that may be described with a geometric representation as described hereinafter.

In a first operation of the encoding process, first data representative of a geometric representation of the region is encoded, written or signaled in the container 110.

The first data may comprise:
- first information representative of a type of the geometric representation, the type corresponding to primitive or mesh; and
- second information representative of:
   - a geometric shape associated with the primitive when the first information is representative of the primitive type, or
   - a set of elements when the first information is representative of the mesh type.

A primitive corresponds to a simple geometric shape such as a cube, cylinder, sphere, cone, pyramid or torus for example. A primitive may be generated via one or more parametric equations, e.g., implicit equations.

A mesh corresponds to a collection of vertices, edges and faces. The mesh defines the outer surface of the region. A vertex is defined via its coordinates in the coordinate system associated with the 3D environment, i.e., via 3 coordinates according to 3 orthogonal axes X, Y and Z of the coordinate system. The edges connect the vertices to each other by pair and the faces are each identified by 3 or more vertices. The faces correspond for example to triangles identified with 3 vertices. According to another example, the faces correspond to quadrilaterals identified with 4 vertices.

The first information is signaled and identified in the container 110 with a unique region type identifier corresponding to an unsigned integer encoded on 8 bits for example. The region type identifier signals whether the region is geometrically represented with a primitive or with a mesh.

When the first information identifies the primitive type, the second information identifies the shape of the primitive, e.g., cube or a sphere, or more specifically a unit cube or a unit sphere.

When the first information identifies the primitive type, the second information is signaled and identified in the container 110 with a unique primitive type identifier (identifying the shape) corresponding to an unsigned integer encoded on 8 bits for example.

When the first information identifies the mesh type, the second information identifies a mesh having a set of elements comprising the vertices and faces of the mesh.

When the first information identifies the mesh type, the second information is signaled and identified in the container 110 with a unique mesh identifier corresponding to an unsigned integer encoded on 8 bits for example.

A list of meshes may be identified in the container 110 or in a separate container, each mesh being signaled and identified via its unique mesh identifier. A set or list of vertices each identified with a unique vertex identifier and a set or list of faces each identified with a unique face identifier are associated with each mesh of the list of meshes.

Each vertex is signaled and identified in the container 110 via a unique vertex identifier corresponding to an integer encoded on 16 bits for example. The vertex identifier refers to 3 coordinates each corresponding to a floating value encoded on 16 bits for example.

The list of vertices and associated coordinates are for example encoded and signaled in the container 110 or in a separate container transmitted separately to the destination device 12 by the source device 11, e.g., beforehand.

Each face is signaled in the container 110 via a unique face identifier corresponding to an integer encoded on 16 bits for example, a set of 3 vertices each signaled or identified via its vertex identifier being associated with the face identifier to define the face.

In a second operation of the encoding process, second data representative of a position of the geometric representation of the region in the 3D environment and representative of a set of transforms applied to the geometric representation of the region is encoded, written or signaled in the container 110.

The position corresponds for example to the position of a reference point of the geometric representation in the 3D environment. The reference point may vary according to the type of the geometric representation. The position is defined with 3 coordinates in the coordinate system of the 3D environment.

For example, when the type of the geometric representation corresponds to the primitive type, the reference point may correspond to the center of the sphere when the shape of the primitive corresponds to a sphere. The reference point may correspond to the bottom left front corner when the shape of the primitive corresponds to a cube.

When the type of the geometric representation corresponds to a mesh, the reference point corresponds to one of the vertices of the mesh, for example the vertex having the highest coordinate according to the Z axis or the vertex having the lowest coordinate according to the X axis.

The position is for example signaled and identified in the container 110 via a unique position identifier corresponding to an integer encoded on 32 bits.

A list of positions and associated coordinates are for example encoded and signaled in the container 110 or in a separate container transmitted separately to the destination device 12 by the source device 11, e.g., beforehand. Each position is assigned its position identifier. Each position identifier of the list refers to 3 coordinates each corresponding to a floating value encoded on 32 bits for example.

The set of transforms may comprise:
- a scaling; and
- a rotation.

The scaling is for example signaled and identified in the container 110 via a unique scaling identifier corresponding to an integer encoded on 32 bits.

A scaling is defined with 3 scaling factors each associated with one axis of the coordinate system of the 3D environment.

Applying a scaling to the geometric representation enables to increase or decrease the size of the geometric representation, according to the scaling factors.

Each scaling factor of a scaling is defined with a floating value encoded on 32 bits for example. A scaling factor less than 1 leads to a decrease of the size of the geometric representation according to the corresponding axis. A scaling factor greater than 1 leads to an increase of the size of the geometric representation according to the corresponding axis. A scaling factor equal to 1 keeps the original size of geometric representation according to the corresponding axis.

A list of scaling and associated scaling factors is for example encoded and signaled in the container 110 or in a separate container transmitted separately to the destination device 12 by the source device 11, e.g., beforehand. Each scaling is assigned its scaling identifier. Each scaling identifier of the list refers to 3 scaling factors each corresponding to a floating value encoded on 32 bits for example.

The rotation is for example signaled and identified in the container 110 via a unique rotation identifier corresponding to an integer encoded on 32 bits.

A rotation is defined with 3 rotation angles each associated with one axis of the coordinate system of the 3D environment.

Applying a rotation to the geometric representation enables to rotate the geometric representation from its original position, according to the rotation angles. A rotation with rotation angles equal to 0 keeps the geometric representation in its original position.

Each rotation angle of a rotation is defined with a floating value encoded on 32 bits for example.

A list of rotations and associated rotation angles are for example encoded and signaled in the container 110 or in a separate container transmitted separately to the destination device 12 by the source device 11, e.g., beforehand. Each rotation is assigned its rotation identifier. Each rotation identifier of the list refers to 3 rotation angles each corresponding to a floating value encoded on 32 bits for example.

In a third operation of the encoding process, third data representative of color attributes associated with the region is encoded, written or signaled in the container 110.

The color attributes comprise for example color or chrominance information (or chroma).

In a variant, the color attributes further comprise luminance or brightness information (or luma).

The chrominance information is for example signaled or identified with an integer encoded on 8, 10 or 12 bits for each color channel of the color space used for defining the chrominance information. The color space may correspond to the RGB (Red, Green, Blue) color space, the color information being then signaled or identified with 1 integer (for example encoded on 8 bits) for each of the color channel R, G and B.

The luminance information is for example signaled or identified with a floating value for example encoded on 32 bits.

Data representative of each region of the 3D environment may then be encoded in the container 110 via the syntax elements of following Table 1, in accordance with an exemplary and non-limiting embodiment of the disclosure.

**Table 1**

| **Syntax element** | **Descriptor** |
|---|---|
| count_regions | u(16) |
| for (i = 0; i < count_regions; i++) { | |
| id | id is determined by the index i |
| position.id | u(32) |
| rotation.id | u(32) |
| scale.id | u(32) |
| color.red | u(8) |
| color.green | u(8) |
| color.blue | u(8) |
| brightness | fl(32) |
| region.type | ue(8) |
| if (region.type == PRIMITIVE) { | |
| primitive.type | ue(8) |
| } | |
| if (region.type == GEOMETRY) { | |
| geometry.id | u(16) |
| } | |
| } | |

Wherein:
- u(8) corresponds to an integer encoded on 8 bits, u(16) corresponds to an integer encoded on 16 bits, fl(32) corresponds to a floating value encoded on 32 bits and ue(8) corresponds to an unsigned integer encoded on 8 bits,
- "count_regions" defines the number of regions encoded and signaled in the container 110,
- "id" corresponds to the region identifier,
- "position.id" corresponds to the position identifier,
- "rotation.id" corresponds to the rotation identifier,
- "scale.id" corresponds to the scaling identifier,
- "color.red", "color.green" and "color.blue" correspond to the color value of the red channel, green channel and blue channel, respectively,
- "color.green" corresponds to the color value of the red channel,
- "region.type" corresponds to the region type identifier,
- "geometry.id" corresponds to the mesh identifier.

Data representative of the lists of positions, scaling, rotation and meshes may further be encoded in the container 110, or in a separate container, via the syntax elements of following Table 2, in accordance with an exemplary and non-limiting embodiment of the disclosure.

**Table 2**

| **Syntax element** | **Descriptor** |
|---|---|
| count_positions | |
| for (i = 0; i < count_positions; i++) { | u(32) |
| id | id is determined by the index i |
| position.x | fl(32) |
| position.y | fl(32) |
| position.z | fl(32) |
| } | |
| count_rotations | u(32) |
| for (i = 0; i < count_rotations; i++) { | |
| id | id is determined by the index i |
| rotation.x | fl(32) |
| rotation.y | fl(32) |
| rotation.z | fl(32) |
| } | |
| count_scales | u(32) |
| for (i = 0; i < count_scales; i++) { | |
| id | id is determined by the index i |
| scale.x | fl(32) |
| scale.y | fl(32) |
| scale.z | fl(32) |
| } | |
| count_geometries | u(16) |
| for (i = 0; i < count_geometries; i++) | |
| { | |
| id | id is determined by the index i |
| count_vertices | |
| for (j = 0; j < count_vertices; j++) { | |
| id | id is determined by the index j |
| vertex.x | fl(32) |
| vertex.y | fl(32) |
| vertex.z | fl(32) |
| } | |
| count_faces | u(16) |
| for (j = 0; j < count_faces; j++) { | |
| id | id is determined by the index j |
| vertex_id_1 | u(16) |
| vertex_id_2 | u(16) |
| vertex_id_3 | u(16) |
| } | |
| } | |

The geometric representation of regions 21 and 22 of a 3D environment 2 obtained through primitives is illustrated on **Figure 2**, in accordance with at least one exemplary embodiment. A 3D coordinate system of the 3D environment 2 is represented with orthonormal axis X, Y and Z, the origin of this coordinate system corresponding for example to the reference point O of the 3D environment 2, this reference point corresponding for example to the bottom left front corner of the rectangular parallelepiped representing the 3D environment 2. The geometric shape of region 21 corresponds to a rectangular parallelepiped obtained by applying a scaling to a primitive corresponding to a unit cube. The reference point 211 of the geometric representation of the region 21 corresponds to the bottom left front corner of the cube. The position of the reference point 211 is defined with a set of 3 coordinates defined in the space of the 3D environment 2, i.e., in the 3D coordinate system X, Y, Z. The geometric shape of region 22 corresponds to a sphere obtained from the primitive corresponding to a unit sphere. The reference point 221 of the geometric representation of the region 22 corresponds to the center of the sphere, the coordinates of the reference point 221 being defined in the space of the 3D environment 2, i.e., in the 3D coordinate system X, Y, Z. A scaling may be applied to the unit sphere to obtain the geometric representation of region 22.

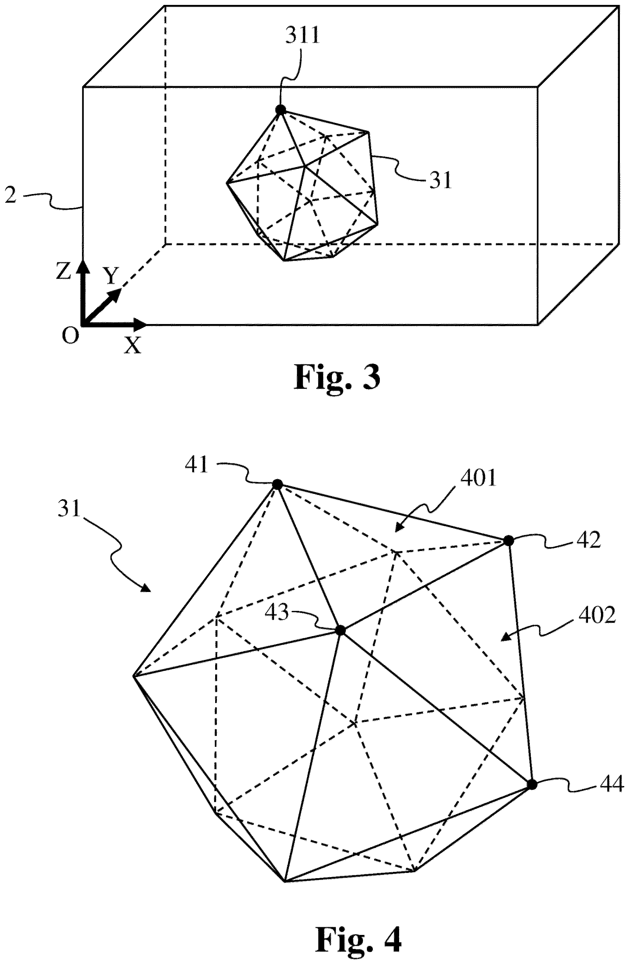

The geometric representation of region 31 of a 3D environment 2 obtained through a mesh is illustrated on **Figure 3**, in accordance with at least one exemplary embodiment. The position of the reference point 311 of the geometric representation of region 31 is defined with a set of 3 coordinates defined in the space of the 3D environment 2, i.e., in the 3D coordinate system X, Y, Z. The mesh defines the outer shape of the geometric representation of region 31. The mesh is defined with a set of vertices including the reference point 311 and a set of faces. As illustrated on **Figure 4**, each face of the mesh corresponds to a triangle defined with 3 vertices of the set of vertices. For example, face 401 is defined with the vertices 41, 42 and 43, the vertex 41 corresponding for example to the reference point 311 of the geometric representation of region 31, and face 402 is identified with the vertices 42, 43 and 44.

The use of identifiers to signal the geometric representation of the region enables to reduce the amount of data to be transmitted, the identifier referring to lists of positions, scaling, rotation and meshes encoded in the container 110 or in a separate container. The data representative of the lists of position, scaling, rotation and/or mesh is transmitted once but may be used several times via the use of identifiers referring to this data.

The use of primitive to generate a region is particularly advantageous as the data to be transported limits to the type of the primitive, the associated shape being automatically generated by the destination device 12 from the equation(s) of the primitive that may be stored in a memory of the destination device 12.

In an embodiment, the encoding process may further comprise an additional operation of encoding fourth data representative of a timestamp of associating the color attributes with the region in the container 110.

The timestamp associated with a region corresponds to time information (for example defined in millisecond (ms)) and may be identified or signaled in the container 110 with an integer encoded on 16 bits for example.

The associating of a timestamp with a region enables to indicate the time of occurrence of the region, i.e., when the region is to be generated and when the color obtained from the color attributes associated with the region is to be rendered, then rendering time corresponding to the timestamp. This is helpful when the color is to be rendered at a specific time, e.g., when the data encoded in the container 110 is associated with a media content such as a video content or a video game. The data encoded in the container 110 may define color effect(s) associated with the media content, e.g., with events occurring in the media content to enrich the media content and user experience of a user consuming the video content.

According to a variant, the encoding process further comprises encoding fifth data representative of a duration of associating the color attributes with the region from the timestamp in the container 110.

The fifth data is used to encode or signal the duration or lifetime (for example defined in ms) of the region and of the association of the color attributes with the region. According to this variant, the timestamp represents the starting time of the generation of the region and the duration represents its lifetime starting from the timestamp. In another example, the fifth data represents the ending time of the generation of the region.

The duration may be identified or signaled in the container 110 with an integer encoded on 16 bits for example.

According to this embodiment, the data representative of each region of the 3D environment may then be encoded in the container 110 via the syntax elements of following Table 3.

**Table 3**

| **Syntax element** | **Descriptor** |
|---|---|
| count_regions | u(16) |
| for (i = 0; i < count_regions; i++) { | |
| id | id is determined by the index i |
| position.id | u(32) |
| rotation.id | u(32) |
| scale.id | u(32) |
| color.red | u(8) |
| color.green | u(8) |
| color.blue | u(8) |
| brightness | fl(32) |
| timestamp | u(16) |
| lifetime | u(16) |
| region.type | ue(8) |
| if (region.type == PRIMITIVE) { | |
| primitive.type | ue(8) |
| } | |
| if (region.type == GEOMETRY) { | |
| geometry.id | u(16) |
| } | |
| } | |

In an embodiment, the encoding process may further comprise an additional operation of encoding sixth data representative of a color transition to be applied to the region starting with the color attributes in the container 110, the sixth data comprising data representative of target color attributes ending the color transition.

A color transition is used to change the color of a region from an initial color, at the beginning of the color transition, to a final color at the end of the color transition.

The initial color is defined with the color attributes associated with the region in the section of the container 110 defining the region, i.e., with the syntax elements "color.red", "color.green" and "color.blue" as defined in the exemplary tables 1 and 3.

The color transition starts when the duration of association of the color obtained from the color attributes with the region (defined with the syntax elements "timestamp" and "lifetime") expires.

The final color is signaled and defined in the container 110 with target color attributes, e.g., with an integer encoded on 8, 10 or 12 bits for each color channel of the color space used for defining the chrominance information associated with the target color attributes.

The container 110 may comprise one or more color transitions, each color transition being signaled and identified with:
- a color transition identifier signaled with an integer encoder on 16 bits for example,
- the region identifier to identify the region to which the color transition applies,
- the type of the color transition signaled with an unsigned integer encoded on 8 bits for example,
- parameters of the target color attributes signaled with integer encoded on 8 bits (one integer for each color channel) or floating values encoding on 16 bits (one floating value for each channel) depending on the color space used to define the target color attributes, for example RGB or HSV (Hue, Saturation and Value, also called HSB for Hue, Saturation and Brightness).

The type of the color transition corresponds for example to one of the following operation or effect: RGB interpolation, HSV interpolation, or any other color transition effect.

When the color transition corresponds to an HSV interpolation and the initial color is defined or signaled with RGB chrominance information, the RGB chrominance information is converted into the HSV space, then interpolated to obtain the final color, and then converted back to the RGB space before being used or rendered.

According to this embodiment, the data representative of each color transition may be encoded in the container 110 via the syntax elements of following Table 4.

**Table 4**

| **Syntax element** | **Descriptor** |
|---|---|
| count_transitions | |
| for (i = 0; i < count_regions; i++) { | u(16) |
| id | id is determined by the index i |
| region.id | u(32) |
| transition.type | ue(8) |
| if(transition.type == RGB_INTERPOLATION) { | |
| target.red | u(8) |
| target.green | u(8) |
| target.blue | u(8) |
| } | |
| if(transition.type == HSV_INTERPOLATION) { | |
| target.hue | fp(32) |
| target.saturation | fp(32) |
| target.value | fp(32) |
| } | |
| } | |

In an embodiment, the encoding process may further comprise an additional operation of encoding data representative of one or more color or chroma events in the container 110.

A chroma event may correspond to a color or chroma animation (or lighting effect) to be triggered or controlled by the control device receiving the decoded data identifying the chroma event in the container 110.

The container may comprise an information representative of the number of chroma events signaled in the container 110, the number of chroma events being for example signaled with a syntax element called "count_events", the number of chroma events being encoded with a 16 bits integer.

The data comprises for each chroma event:
- the identifier of the name of the chroma event (for example signaled with the syntax element "event_name_id"), the identifier corresponding to a 16 bits integer, and
- a timestamp encoded with a 16 bits integer corresponding to the time (e.g., defined in ms), on a timeline, at which the chroma event is to be triggered.

A list of chroma event names may be identified in the container 110 or in a separate container, each chroma event name being signaled and identified via its unique chroma event name identifier, a name corresponding to a string of characters being associated with each chroma event name identifier.

Data representative of the list of chroma event names and of the chroma events may further be encoded in the container 110 (or in a separate container) via the syntax elements of following Table 5, in accordance with an exemplary and non-limiting embodiment of the disclosure.

**Table 5**

| **Syntax element** | **Descriptor** |
|---|---|
| count_event_names | u(16) |
| for (i = 0; i < count_event_names; i++) { | |
| id | id is determined by the index i |
| event_name | string |
| } | |
| count_events | u(16) |
| for (i = 0; i < count_events; i++) { | |
| event_name_id | u(16) |
| timestamp | u(16) |
| } | |

In an embodiment, the encoding process may further comprise an additional operation of encoding data representative of one or more actions in the container 110.

An action (or function) may be associated with one or more keys of a keyboard used as input peripheral to control actions in a game for example, the action being implemented when the associated key is actuated. When gaming with a standard keyboard, only a part of the keys of the keyboard may be used, for example the WASD keys of a QWERTY keyboard and the ZQSD keys of an AZERTY keyboard. The WASD are commonly used to control avatar movements in computer games, keys W and S being used to control forward and backward while A and D are used to control strafing left and right. Other keys like the space bar, the control key, the shift key and others may be used to control avatar actions, e.g., jump, crouch, sprint, shoot, strike, etc.

The data may comprise for each action of a defined number of actions (for example signaled with the syntax element "count_actions"):
- an identifier identifying the action, the identifier corresponding for example to a 16 bits integer,
- a name of the action corresponding to a string of characters,
- chrominance information (chroma) associated with the action, the chroma information being signaled and identified with an integer encoded on 8, 10 or 12 bits for each color channel of the color space used for defining the chrominance information, e.g., the RGB (Red, Green, Blue) color space,
- luminance or brightness information (luma) encoded or signaled with a 32 bits floating value,
- a timestamp encoded with a 16 bits integer corresponding to the time (e.g., defined in ms), on a timeline, at which the lighting effect (chroma and luma) is to be triggered, and
- the duration of the lighting effect encoded with a 16 bits integer (e.g., defined in ms).

Data representative of the list of the actions may further be encoded in the container 110 via the syntax elements of following Table 6, in accordance with an exemplary and non-limiting embodiment of the disclosure.

**Table 6**

| **Syntax element** | **Descriptor** |
|---|---|
| count_actions | u(16) |
| for (i = 0; i < count_actions; i++) { | |
| id | id is determined by the index i |
| name | string |
| color.red | u(8) |
| color.green | u(8) |
| color.blue | u(8) |
| brightness | fl(32) |
| timestamp | u(16) |
| lifetime | u(16) |
| } | |

In an embodiment, the encoding process may further comprise an additional operation of encoding data representative of a version of the format of the encoded data and syntax element of the container 110.

The format version may be signaled and identified in the container 110 with a 16 bits integer for example.

In a further embodiment, the container 110 may be compressed before being transmitted by the source device 11 to the destination device 12, to reduce bandwidth needed to transport the container. The container 110, as well as the separate container, may be compressed according to the zip format or according to any other known compressed format such as 7z format.

The process of decoding the data representative of the one or more regions of the 3D environment from the container 110 is implemented in the destination device 12, and more specifically in the decoder 122.

The decoding process comprises decoding operations corresponding to the encoding operations described hereinabove with respect to the various embodiments of the encoding process.

The container 110, and the separate container(s) if applicable, is/are received. The data contained in the container 110 is read during a parsing operation.

In a first operation of the decoding process, first data representative of a geometric representation of the region is parsed or read and decoded from the container 110.

In a second operation of the decoding process, second data representative of a position of the geometric representation of the region in the 3D environment and representative of the set of transforms applied to the geometric representation of the region is parsed, read, and decoded from the container 110.

In a third operation of the decoding process, third data representative of color attributes associated with the region is parsed, read, and decoded from the container 110.

In an embodiment, the decoding process may further comprise decoding fourth data representative of a timestamp of associating the color attributes with the region from the container 110.

According to a variant, the decoding process further comprises decoding fifth data representative of a duration of associating the color attributes with the region from the timestamp from the container 110.

In an embodiment, the decoding process may further comprise decoding sixth data representative of a color transition to be applied to the region starting with the color attributes from the container 110, the sixth data comprising data representative of target color attributes ending the color transition.

In an embodiment, the decoding process may further comprise decoding data representative of one or more color or chroma events from the container 110.

In an embodiment, the decoding process may further comprise decoding data representative of one or more actions from the container 110.

Every aspect, variant and embodiment described with respect to the encoding process applies in a similar way to the decoding process with corresponding operation of parsing, reading and decoding data or information comprised in the received container(s).

The data and information obtained from the container 110 and the separate container may be stored in a memory, e.g., buffers, for further processing.

The further processing may be implemented by the destination device 12 and/or the control device.

The further processing comprises controlling one or more lighting devices 13 according to the decoded data and information.

Controlling the one or more lighting devices may comprise the following operations:
- receiving eighth data representative of a position / location of each lighting device 13 in the 3D environment 2 or 3;
- checking intersection between the lighting device and each region 21, 22 or 31 according to the first, second and eighth data; and
- controlling each lighting device according to a result of the checking operation.

The eighth data is representative of the position of each lighting device in the space or frame of reference of the 3D environment 2 or 3. The eighth data may comprise the position of a reference point of the lighting device, the position being defined with a set of coordinates in the coordinate system of the 3D environment 2 or 3.

The eighth data may further comprise one or more of the following data/information or attributes characterizing the lighting device, in any possible combination:
- a size of the lighting device (e.g., width, height and depth), and/or
- the number of light-emitting device(s) comprised in the lighting device, notably when the lighting device comprises a plurality of light-emitting devices, e.g., LED (light-emitting diode), and/or
- the spatial arrangement of the light-emitting devices in the lighting device (e.g., a line, a matrix with N columns and M rows, etc.), and/or
- the relative position of each light-emitting device with respect to the reference point of the lighting device, i.e., the position of each light-emitting device defined in the local space or frame of reference of the lighting device, and/or
- brightness values / interval that the lighting device is configured to render, and/or
- color associated with each light-emitting device, and/or
- color temperature associated with each light-emitting device, and/or
- update frequency or refresh rate of the lighting device / light-emitting devices.

The eighth data is for example transmitted by a data processing device, such as a smartphone, a tablet, a laptop, a computer or a server, communicatively coupled with the destination device 12 or control device, e.g., via a wired connection (e.g., USB) or via a wireless connection (e.g., Wifi^{®} or Bluetooth^{®}). The transmitting may be initiated by the data processing device or upon reception of a request transmitted by the destination 12 (or the control device) to obtain the eighth data.

According to another example, the eighth data is transmitted by each lighting device to the destination device 12 or control device, e.g., via a wired connection (e.g., USB) or via a wireless connection (e.g., Wifi^{®}, Bluetooth^{®}, Zigbee^{®}). According to this example, each lighting device 13 stores in its memory the eighth data. The eighth data may be received automatically, for example when connecting the lighting device(s) to the destination device 12 or control device, the destination device 12 (or the control device) and each of the lighting devices automatically initiating a process for communicating the eighth data through dedicated API(s). This process corresponds for example to a so-called "plug and play" (PnP) process, the destination device 12 (or the control device) and the lighting device(s) corresponding to PnP devices. According to a variant, the eighth data is received upon reception by the lighting device(s) of a request transmitted by the destination device 12 (or the control device) to obtain the eighth data.

Knowing the position of each lighting device 13 in the 3D environment 2 or 3, any intersection between the lighting device 13 and the region(s) 21, 22 or 31 comprised in the 3D environment 2 or 3 is checked, searched or determined using the eighth data representative of the position of the lighting device in the 3D environment 2, 3 and on the first and second data representative of the volume occupied by each region in the 3D environment 2 or 3 and of the position of this volume.

Checking an intersection between a lighting device and a region comprises determining whether the lighting device is comprised at least partially within the region, i.e., within the space or volume defined by the geometric representation of the region in the 3D environment.

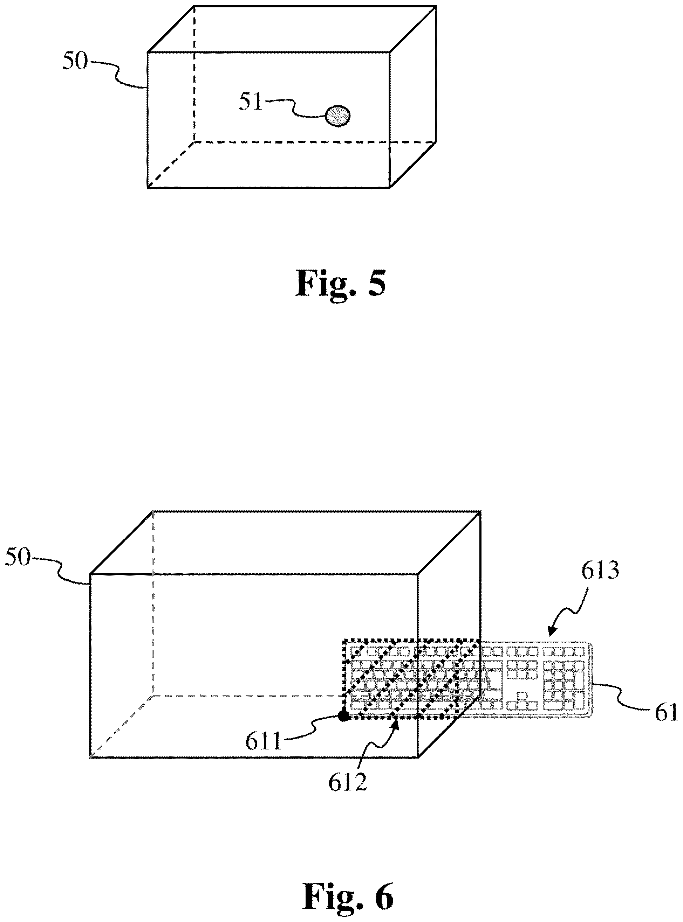

**Figure 5** shows an example of a lighting device 51 being comprised in a region 50 of the 3D environment 2. The region 50 may correspond to the region 21, 22 or 31 of the 3D environment 2 or to any region comprised in the 3D environment 2. According to the example of Figure 5, the lighting device 51 may correspond to a lighting device comprising only one light-emitting device. The lighting device 51 is considered as being comprised in the region 50 when its position in the 3D environment, i.e., the coordinates of its reference point, belongs to the space or volume occupied by the region 50 in the 3D environment 2.

**Figure 6** shows an example of a lighting device 61 being partially comprised in the region 50. According to the example of Figure 6, the lighting device 61 corresponds to a lighting device comprising a plurality of light-emitting devices, e.g., LEDs. According to the example of Figure 6, the lighting device 61 corresponds to a keyboard with keys each associated with a LED (each key comprising a LED). The third data defines the position of the reference point 611 of the keyboard in the 3D environment 2 and the relative position of each LED of the keyboard in the local space of the keyboard, i.e., the relative position of each LED of the keyboard with respect to the reference point 611. According to this example, checking the intersection between the lighting device 61 and the region 50 comprises determining which light-emitting devices of the lighting device 61 are comprised in the space or volume occupied by the region 50 in the 3D environment 2. According to the example of Figure 6, the left-hand part 612 of the lighting device 61 highlighted with bold points intersects with the region 50, i.e., is comprised in the region 50, while the right-hand part 613 of the lighting device 61 does not intersect with the region 50, the right-hand part 613 being not comprised in the region 50, i.e., the right-hand part 613 being outside the space or volume occupied by the region 50 in the 3D environment 2.

When a lighting device comprises a single light-emitting device, the lighting device and the light-emitting device refer to the same device.

Each lighting device is controlled according to the result of the checking operation. Each light-emitting device of the lighting device is further controlled according to the result of the checking operation.

When the result of the checking operation does not reveal any intersection between a region of the 3D environment and the lighting device, then the lighting device is controlled to not emit light, meaning that no control signal is transmitted to the lighting device, which then stays in an off state.

When the result of the checking operation shows an intersection between the lighting device and a single region, the lighting device is controlled according to the second data representative of the color attributes associated with the region, i.e., according to the color attributes of the region. The lighting device is controlled to emit light according to lighting control parameters determined from the color attributes. The lighting control parameters correspond for example to the color attributes (e.g., chroma and luma information). According to another example, the lighting control parameters are determined from the color attributes associated with the region and from the lighting rendering capabilities of the lighting device comprised in the third data received by the destination source 12. According to this example, the destination source 12 processes and adjusts the color attributes associated with the region according to the lighting rendering capabilities (e.g., the brightness, color and/or color temperature that each light-emitting device is configured to render) of the lighting device to determine the lighting control parameters to be transmitted to the lighting device.

When the result of the checking operation shows an intersection between the lighting device and a plurality of regions, one region of the plurality of region is selected. The selected region corresponds for example to the region having the smallest volume, i.e., the region occupying the smallest volume in the 3D environment. The lighting device is controlled to emit light according to lighting control parameters determined from the color attributes associated with the selected region, as discussed hereinbelow.

In other words, checking an intersection between a lighting device and a region corresponds to determining presence information representative of presence or absence of the lighting device, and the presence or absence of each light-emitting device of the lighting device when applicable, within the (selected) region, the controlling of the lighting device comprising controlling each light-emitting device of the lighting device according to the presence information. According to the example of Figure 5, the lighting device 51 is controlled according to the color attributes of the region 50, and optionally according to the lighting rendering capabilities of the lighting device 51, if any.

According to the example of Figure 6, the lighting device 61 is controlled according to the color attributes of the region 50, and optionally according to the lighting rendering capabilities of the lighting device 61, if any. More specifically, each light-emitting device of the lighting device 61, i.e., each LED associated with a key, is controlled according to the color attributes of the region 50, and optionally according to the lighting rendering capabilities of the lighting device 61, if any. Each LED comprised in the left-hand part 612 and inside the region 50 is controlled to emit light according to the second data representative of the color attributes of the region 50. Each LED comprised in the right-hand part 613 and outside the region 50 is controlled to not emit light.

The control of each light-emitting device of the lighting device is according to the color attributes of the (selected) region, each light-emitting device being further controlled to emit light at a time corresponding to the timestamp decoded from the container 110 and associated with the (selected) region and for a duration equal to the duration decoded from the container 110 and associated with the (selected) region, when applicable.

The lighting control parameters may comprise one or more of the following parameters, in any possible combination:
- a parameter identifying each light-emitting device to be activated to emit light, the parameter corresponding for example to the relative position of the light-emitting device to be activated, for example the position in a line, row and column index, etc.; and/or
- a parameter representative of activation for each light-emitting device located or comprised in a region of the 3D environment; and/or
- a parameter representative of deactivation for each light-emitting device not comprised in the region, i.e., located outside the volume occupied by the region in the 3D environment; and/or
- for each light-emitting device located or comprised in a region of the 3D environment, parameters representative of the color information (chroma and luma information for example) to be rendered.

If a color transition targeting the (selected) region, each light-emitting device is further controlled to emit light according to the parameters of the color transition decoded from the container 110, when applicable.

The control of the lighting device, i.e., of each light-emitting device of the lighting device, comprises transmitting the lighting control parameters determined from the color attributes, and optionally according to the lighting rendering capabilities of each light-emitting device of the lighting device, to the lighting device, via the wired connection or wireless connection coupling the destination device 12 with the lighting device.

The transmitting may be implemented at a time corresponding to the timestamp to trigger the emission of light according to the lighting control parameters at the time corresponding to the timestamp. A sequence of lighting control parameters may be transmitted in a timely manner, for example when a color transition is to be rendered.

In an embodiment, the third data representative of the position of each lighting device is transmitted by the destination device 12 to a remote device corresponding to the source device 11.

According to this embodiment, the source device 11 determines which region(s) of the 3D environment 2 intersects with the lighting device(s) (i.e., which region(s) of the 3D environment comprises at least partially the lighting device(s)). The source device 11 transmits only data relative to the region(s) intersecting with the lighting device(s) to the destination device 12 in the container 110, and in the separate containers when applicable, which enables to save bandwidth and resources.

According to this embodiment, the source device 11 selects the region(s) having at least a point in common with each of the lighting device and generates the container 110, and the separate containers when applicable, in such a way that the container 110 comprises only data representative of the region(s) having at least a point in common with one or more lighting devices comprised in the 3D environment.

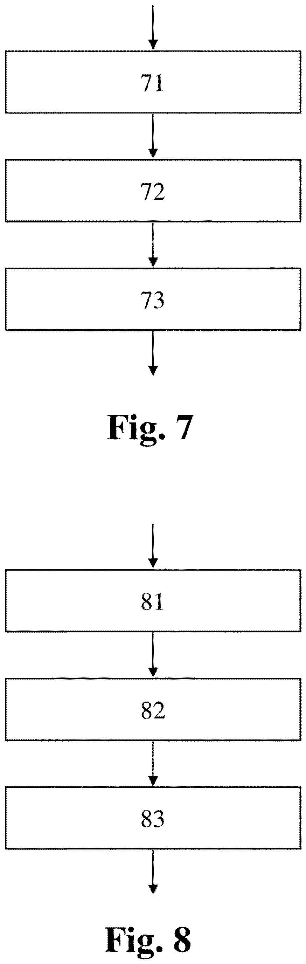

**Figure 7** shows a schematic block diagram of steps of a method of encoding data representative of a region of a three-dimensional environment, called 3D environment, in a container, in accordance with at least one exemplary embodiment.

In a first step 71, first data representative of a geometric representation of the region is encoded in the container.

In a second step 72, second data representative of a position of the geometric representation in the 3D environment and of a set of transforms applied to the geometric representation is encoded in the container.

In a third step 73, third data representative of color attributes associated with the region is encoded in the container.

According to an exemplary embodiment, the variants and examples of operations described in relation to one of Figures 1 to 6 apply to the method steps of Figure 7.

**Figure 8** shows a schematic block diagram of steps of a method of decoding data representative of a region of a three-dimensional environment, called 3D environment, from a container, in accordance with at least one exemplary embodiment.

In a first step 81, first data representative of a geometric representation of the region is decoded from the container.

In a second step 82, second data representative of a position of the geometric representation in the 3D environment and of a set of transforms applied to the geometric representation is decoded from the container.

In a third step 83, third data representative of color attributes associated with the region is decoded from the container.

According to an exemplary embodiment, the variants and examples of operations described in relation to one of Figures 1 to 6 apply to the method steps of Figure 8.

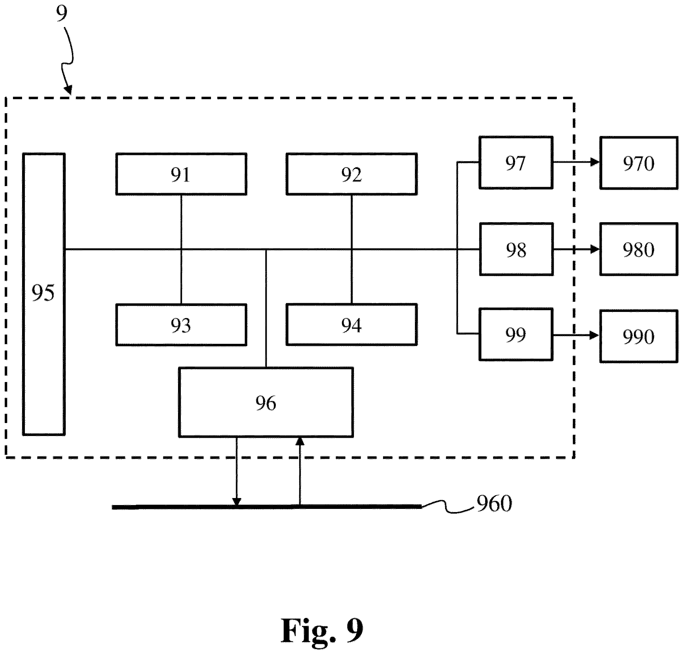

**Figure 9** shows a schematic block diagram illustrating an example of an apparatus or system 9 in which various aspects and exemplary embodiments are implemented.

System 9 may be embedded as one or more devices including the various components described below. In various embodiments, the system 9 may be configured to implement one or more of the aspects described in the present application.

Examples of equipment that may form all or part of the system 9 include personal computers, laptops, smartphones, tablet computers, digital multimedia set top boxes and their associated processing systems, display devices, light-emitting devices, servers, chroma encoders, chroma decoders, video encoders, video decoders, post-processors processing output from a chroma and/or video decoder, pre-processors providing input to chroma and/or video encoder, web servers, set-top boxes, wireless (e.g., Bluetooth^{®}) connected wearable devices, game controller, mouse, mousepad, keyboard, palm rest, chairs, desk, XR headset, headphones, bracelet, head and/or lumbar support device or chair, any other device for processing chroma (lighting) data or signals, and/or video data or signals, or other communication devices. Elements of system 9, singly or in combination, may be embodied in a single integrated circuit (IC), multiple ICs, and/or discrete components. For example, in at least one embodiment, the processing and encoder/decoder elements of system 9 may be distributed across multiple ICs and/or discrete components. In various embodiments, the system 9 may be communicatively coupled to other similar systems, or to other electronic devices, via, for example, a communications bus or through dedicated input and/or output ports.

The system 9 may include at least one processor 91 configured to execute instructions loaded therein for implementing, for example, the various aspects described in the present application. Processor 91 may include embedded memory, input output interface, and various other circuitries as known in the art. The system 9 may include at least one memory 92 (for example a volatile memory device and/or a non-volatile memory device). System 9 may include a storage device 94, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 94 may include an internal storage device, an attached storage device, and/or a network accessible storage device, as non-limiting examples.

The system 9 may include an encoder/decoder module 93 configured, for example, to process data to provide encoded/decoded chroma (lighting) signal data and/or encoded/decoded video signal or data, and the encoder/decoder module 93 may include its own processor and memory. The encoder/decoder module 93 may represent module(s) that may be included in a device to perform the encoding and/or decoding functions. As is known, a device may include one or both of the encoding and decoding modules. Additionally, encoder/decoder module 93 may be implemented as a separate element of system 93 or may be incorporated within processor 91 as a combination of hardware and software as known to those skilled in the art.

Program code to be loaded onto processor 91 or encoder/decoder 93 to perform the various aspects described in the present application may be stored in storage device 94 and subsequently loaded onto memory 92 for execution by processor 91. In accordance with various embodiments, one or more of processor 91, memory 92, storage device 94, and encoder/decoder module 93 may store one or more of various items during the performance of the processes described in the present application. Such stored items may include, but are not limited to, data representative of chroma/lighting content, data representative of video content, a bitstream, matrices, variables, and intermediate or final results from the processing of equations, formulas, operations, and operational logic.

In several embodiments, memory inside of the processor 91 and/or the encoder/decoder module 93 may be used to store instructions and to provide working memory for processing that may be performed during data processing, encoding or decoding.

In other embodiments, however, a memory external to the processing device (for example, the processing device may be the processor) may be used for one or more of these functions. The external memory may be the memory 92 and/or the storage device 94, for example, a dynamic volatile memory and/or a non-volatile flash memory. In at least one embodiment, a fast external dynamic volatile memory such as a RAM may be used as working memory for data processing.

The input to the elements of system 9 may be provided through various input devices as indicated in block 95. Such input devices include, but are not limited to, (i) an RF portion that may receive an RF signal transmitted, for example, over the air by a broadcaster, (ii) a Composite input terminal, (iii) a USB input terminal, (iv) a phone connector (also known as phone jack, audio jack, headphone jack or jack plug) input terminal and/or (v) an HDMI input terminal.

In various embodiments, the input devices of block 95 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 9 to other electronic devices across USB and/or HDMI connections. It is to be understood that various aspects of input processing, for example, analog to digital conversion, time domain to frequency domain conversion, down sampling, band pass or low pass filtering, Reed-Solomon error correction, may be implemented, for example, within a separate input processing IC or within processor 91 as necessary. Similarly, aspects of USB or HDMI interface processing may be implemented within separate interface ICs or within processor 91 as necessary. The processed stream may be provided to various processing elements, including, for example, processor 91, and encoder/decoder 93 operating in combination with the memory and storage elements to process the data stream as necessary for presentation on an output device.

Various elements of system 9 may be provided within an integrated housing. Within the integrated housing, the various elements may be interconnected and transmit data therebetween using suitable connection arrangement 95, for example, an internal bus as known in the art, including the I2C bus, wiring, and printed circuit boards.

The system 9 may include communication interface 96 that enables communication with other devices via communication channel 960. The communication interface 96 may include, but is not limited to, a transceiver configured to transmit and to receive data over communication channel 960. The communication interface 96 may include, but is not limited to, a modem or network card and the communication channel 960 may be implemented, for example, within a wired and/or a wireless medium.

Data may be streamed to the system 9, in various embodiments, using a Wi-Fi network such as IEEE 802.11. The Wi-Fi signal of these embodiments may be received over the communications channel 960 and the communications interface 96 which are adapted for Wi-Fi communications. The communications channel 960 of these embodiments may be typically connected to an access point or router that provides access to outside networks including the Internet for allowing streaming applications and other over-the-top communications.

Other embodiments may provide streamed data to the system 9 using a set-top box or a computer that delivers the data over the HDMI connection of the input block 95.

Still other embodiments may provide streamed data to the system 9 using the RF connection of the input block 95.

The streamed data may be used as a way for signaling information used by the system 9. The signaling information may comprise the data encoded in a container such as a binary stream for example.

It is to be appreciated that signaling may be accomplished in a variety of ways. For example, one or more syntax elements, flags, and so forth may be used to signal information to a corresponding data processing device in various embodiments.

The system 9 may provide an output signal to various output devices, including a display 970, lighting device or light sources 980, and other peripheral devices 990 like haptic devices/actuators.

In various embodiments, control signals may be communicated between the system 9 and the display 970, lighting devices or light sources 980, or other peripheral devices 990 using signaling such as AV.Link (Audio/Video Link), CEC (Consumer Electronics Control), Audio protocols, USB (Universal Serial Bus), HID (Human Interface Design) for USB, HIF UHP (Haptics Industry Forum - Universal Haptic Protocol) or other communications protocols that enable device-to-device control with or without user intervention.

The output devices may be communicatively coupled to system 9 via dedicated connections through respective interfaces 97, 98, and 99.

Alternatively, the output devices may be connected to system 9 using the communications channel 960 via the communications interface 96. The display 970, lighting devices or light sources 980 and/or haptic device(s) (actuators) 990 may be integrated in a single unit with the other components of system 9 in an electronic device such as, for example, a television.

In various embodiments, the display interface 97 may include a display driver, such as, for example, a timing controller (T Con) chip.

The display 970, lighting devices or light sources 980 and/or haptic device(s) (actuators) 990 may alternatively be separate from one or more of the other components. In various embodiments in which the display 970, lighting devices or light sources 980 and/or haptic device(s) (actuators) 990 may be external components, the output signal may be provided via dedicated output connections, including, for example, HDMI ports, USB ports, or COMP outputs.

In **Figures 1 to 8**, various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video and/or haptic and/or chroma encoders, video and/or haptic and/or chroma decoders, haptic engine, chroma engine, post-processors processing output from a video decoder, pre-processors providing input to a video encoder, web servers, set-top boxes, wireless connected wearable haptic devices, e.g., Bluetooth^{®} connected wearable haptic devices, game controller, mouse, mousepad, keyboard, palm rest, chairs, desk, XR headset, headphones, bracelet, head and/or lumbar support device or chair, any light source, and any other device for processing haptic data or signals representative of one or more haptic feedback or effect and/or for processing lighting/chroma data or signals representative of one or more lighting mode or effect, or other communication devices. As should be clear, the equipment may be mobile.

Computer software may be implemented by the processor 91 or by hardware, or by a combination of hardware and software. As a non-limiting example, the embodiments may be also implemented by one or more integrated circuits. The memory 92 may be of any type appropriate to the technical environment and may be implemented using any appropriate data storage technology, such as optical memory devices, magnetic memory devices, semiconductor-based memory devices, fixed memory, and removable memory, as non-limiting examples. The processor 91 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Additionally, this application may refer to "obtaining" various pieces of information. Obtaining the information may include one or more of, for example, receiving the information, determining the information, estimating the information, calculating the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, or estimating the information.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of encoding data representative of a region (21, 22; 31) of a three-dimensional environment (2), called 3D environment, in a container (110), the method comprising:
- encoding (71) first data representative of a geometric representation of said region (21, 22; 31);
- encoding (72) second data representative of a position of said geometric representation in said 3D environment (2) and of a set of transforms applied to said geometric representation; and
- encoding (73) third data representative of color attributes associated with said region (21, 22; 31).

2. The method according to claim 1, further comprising:
- encoding fourth data representative of a timestamp of associating said color attributes with said region (21, 22; 31); and
- encoding fifth data representative of a duration of associating said color attributes with said region (21, 22; 31) from said timestamp.

3. The method according to claim 1 or 2, further comprising encoding sixth data representative of a color transition to be applied to said region (21, 22; 31) starting with said color attributes, said sixth data comprising data representative of target color attributes ending the color transition.

4. The method according to any one of claims 1 to 3, further comprising encoding seventh data representative of at least a color event representative of a color animation, the seventh data comprising data representative of an identifier of the color event.

5. A method of decoding data representative of a region (21, 22; 31) of a three-dimensional environment (2), called 3D environment, from a container (110), the method comprising:
- decoding (81) first data representative of a geometric representation of said region (21, 22; 31);
- decoding (82) second data representative of a position of said geometric representation in said 3D environment (2) and of a set of transforms applied to said geometric representation; and
- decoding (83) third data representative of color attributes associated with said region (21, 22; 31).

6. The method according to claim 5, further comprising:
- decoding fourth data representative of a timestamp of associating said color attributes with said region (21, 22; 31); and
- decoding fifth data representative of a duration of associating said color attributes with said region (21, 22; 31) from said timestamp.

7. The method according to claim 5 or 6, further comprising decoding sixth data representative of a color transition to be applied to said region (21, 22; 31) starting with said color attributes, said sixth data comprising data representative of target color attributes ending the color transition.

8. The method according to any one of claims 5 to 7, further comprising decoding seventh data representative of at least a color event representative of a color animation, the seventh data comprising data representative of an identifier of the color event.

9. The method according to any one of claims 5 to 8, further comprising:
- receiving eighth data representative of a position of a lighting device in said 3D environment (2);
- checking intersection between said lighting device and said region (21, 22; 31) according to said first, second and eighth data;
- controlling said lighting device according to a result of said checking.

10. The method according to claim 9, wherein said controlling comprises transmitting lighting control parameters representative of said color attributes to said lighting device when said lighting device is comprised in said region (21, 22; 31).

11. The method according to any one of claims 1 to 10, wherein said first data comprises:
- first information representative of a type of said geometric representation, said type corresponding to primitive or mesh; and
- second information representative of:
• a geometric shape associated with the primitive when said first information is representative of the primitive type, or
• a set of elements when said first information is representative of the mesh type.

12. The method according to claim 11, wherein when said first information is representative of the mesh type, said second information is representative of an identifier identifying said set of elements, said set of elements comprising a set of vertices (41 to 44) and a set of faces (401, 402), each face of said set of faces being defined with vertex identifiers identifying 3 vertices among said set of vertices (41 to 44).

13. The method according to any one of claims 1 to 12, wherein said position corresponds to a position of a reference point of said geometric representation in said 3D environment and the set of transforms comprises:
- a scaling; and
- a rotation.

14. The method according to any one of claims 1 to 13, wherein said third data comprises chrominance information and luminance information.

15. A device comprising a memory associated with at least a processor configured to implement the method according to any one of claims 1 to 14.

16. A computer program product comprising instructions of program code for executing the method according to any one of claims 1 to 14, when said program is executed on a computer.
